# EUROPEAN PATENT APPLICATION

(11) **EP 3 719 304 A1**
(43) Date of publication of application: **07.10.2020**
(21) Application number: 19166606.4
(22) Date of filing: 01.04.2019
(51) Int. Cl.: F03D 7/04, F03D 17/00

(54) **COMMUNICATION SYSTEM FOR A WIND TURBINE**

(71) Applicant: Siemens Gamesa Renewable Energy A/S, 7330 Brande (DK)
(72) Inventor: Nagel, Eirik, 24939 Flensburg (DE); Nieuwenhuizen, John, 8700 Horsens (DK)
(74) Representative: Aspacher, Karl-Georg

(57) **Abstract**

A wind turbine (1) includes a tower (2), a nacelle (3) and at least one rotatable blade (4) and a communication system (10) comprising:
at least one leaky feeder (20), and
at least a first communication device (30) connected to the least one leaky feeder (20) for respectively transmitting or receiving an electromagnetic signal (100) through the at least one leaky feeder (20).

## Description

### Field of invention

The present invention relates to a communication system providing communication services to a wind turbine. The communication system may be used within the wind turbine, for example for transmitting emergency communications, or externally to the wind turbine for providing communication with an external such as another wind turbine.

### Art Background

Communication systems are normally provided in a wind turbine for providing exchange of information between different points of the wind turbine or between the wind turbine and external objects.

For communications inside the wind turbine tower low signals and poor coverage, in particular when using wireless communication, may be experienced. This is particularly due to the fact that most of the external parts of a wind turbine are formed of metal a Faraday cage effect is to be expected. Consequently, for example in case of an emergency, service technicians inside the wind turbine could not be able to call for help due to bad connection of their mobile phones or of other communication devices. This may be particularly critical for offshore sites, which are characterized by huge sizes which determine extremely long distances to be covered by the communication system.

The installation of a simple antenna can provide a solution to the above problems, but this implies the risk of radiating wideband electromagnetic emissions out of the turbine. The installation of a plurality of antennas inside the wind turbine tower may improve the communications, but may be not a cost effective solution.

For communications of a wind turbine with an outside environment (e.g. airplane, ships or other service vehicles) or with other turbines a generic communication platform is typically used. Communication systems may also be used for distributing a transponder signal in 360 degrees around a wind turbine, to be used for identification of the turbine. A ship or airplane could detect this transponder signal and knows that the wind turbine is present. The turbine could also comprise a communication system for detecting a transponder signal from an airplane or a ship and switch on its signal light, if there is a ship or airplane next to it.

The installation of a plurality of antennas on the wind turbine tower or on the wind turbine nacelle may provide the above described communication functionality, but may be not a cost effective solution.

### Summary of the Invention

Scope of the present invention is to provide a simple, efficient and cost effective communication system for a wind turbine, by solving the inconveniences mentioned with reference to the above cited prior art.

This scope is met by the subject matter according to the independent claims. Other advantageous embodiments of the present invention are described by the dependent claims.

According to the present invention a wind turbine includes a tower, a nacelle, at least one rotatable blade and a communication system comprising:
at least one leaky feeder, and
at least a first communication device connected to the least one leaky feeder for respectively transmitting or receiving an electromagnetic signal through the at least one leaky feeder.

According to embodiments of the present inventions, the communication system may further comprise at least a second communication device for respectively receiving or transmitting the electromagnetic signal respectively from or to the first communication device.

With the term "leaky feeder" it is meant a communications elongated component, which leaks an electromagnetic wave which is transmitted along the component. The leaky feeder may be constituted by a leaky coaxial cable or a leaky waveguide or a leaky stripline. The leaky feeder is connected to the first communication device in order to transmit or receive the electromagnetic signal along the leaky feeder. The electromagnetic signal may travel through the leaky feeder towards or from a second communication device. The leaky feeder allows the first electromagnetic signal to leak out of the leaky feeder along its length and to be made available to the second communication device.

The above described communication system may be used as an internal communication system for connecting two points or sections of the same wind turbine. Such a communication system provides a good coverage in the whole wind turbine allowing emergency calls with the environment outside the wind turbine. The leaky feeder works as an antenna array and may allow for example coverage over the whole length of the tower. Such a communications systems may avoid the installation of a plurality of antennas in the wind turbine, thus reducing electromagnetic emissions from the inside of the wind turbines and increasing safety for service technicians.

The above described communication system may be used as an external communication system for connecting the wind turbine with an external object. Such a communication system provides good coverage of a radio communication signal around the wind turbine. Further it may be cheap and robust.

Using a leaky feeder cable according to the present invention provides a communication system which is cheap and easy to build.

A communication system according to the present invention may be used both as an internal and an external communication system. Using one communication system for multiple purposes may allow a reduction of costs.

According to embodiments of the present inventions, the first communication device is an antenna and the second communication device is a radio frequency communication device. In particular, the second communication device may be a radio frequency communication device used in case of emergency.

The antenna may be installed inside the nacelle or on an external surface of the nacelle. In offshore applications the antenna may be installed inside the nacelle or on an external surface of a transition piece or platform.

According to embodiments of the present inventions, the communication system includes a bandpass filter. The bandpass filter may suppress the radiation of electromagnetic emissions from the inside of the wind turbine, as it may be requested by regulations. The bandpass filter may be connected to one end of the leaky feeder and to the first communication device. In the latter embodiment, the first communication device may for example be an antenna.

According to embodiments of the present inventions, the at least one leaky feeder may be geometrically configured as an arc around the tower. In particular, the at least one leaky feeder may be geometrically configured as a loop surrounding the tower. The leaky feeder may be bent around the tower, thus providing good coverage both for external and internal communication.

According to embodiments of the present invention, at least one of the first communication device and the second communication device is positioned inside the wind turbine or in the surroundings of the wind turbine. Alternatively, at least one of the first communication device and the second communication device is distanced from the wind turbine. For example, at least one of the first communication device and the second communication device may be positioned on a vehicle, such as a plane, airplane, ships or other service vehicles.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine according to embodiments of the present invention.
Fig. 2 shows a schematic view of a power plant including a plurality of wind turbines according to embodiments of the present invention.
Fig. 3 shows another schematic section of a wind turbine according to embodiments of the present invention.

### Detailed Description

The illustrations in the drawings are schematically. It is noted that in different figures, similar or identical elements are provided with the same reference signs.

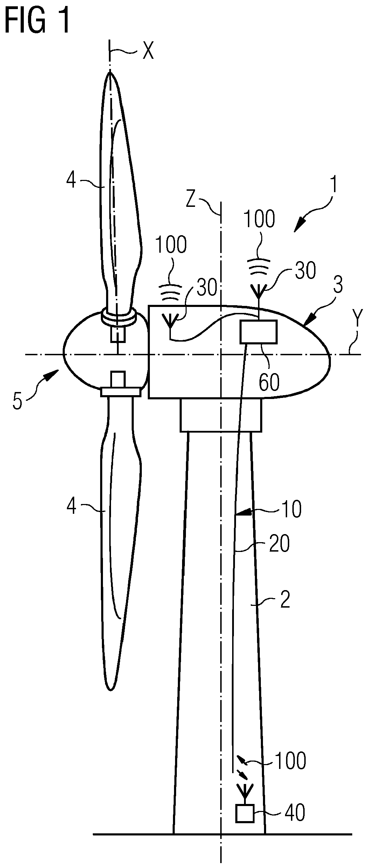

**Figure 1** shows a floating wind turbine 1 for generating electricity. The wind turbine 1 includes a communication system 10 according to the invention. The wind turbine 1 comprises a floating tower 2. A nacelle 3 is arranged on top of the tower 2. The nacelle 3 accommodates the electrical generator (not shown in the attached figures) of the wind turbine 1. In between the tower 2 and the nacelle 3 a yaw angle adjustment device (not shown) is provided, which is capable of rotating the nacelle around a vertical yaw axis Z. The wind turbine 1 further comprises a wind rotor 5 having one or more rotational blades 4 (in the perspective of Figure 1 only two blades 4 are visible). The wind rotor 5 is rotatable around a rotational axis Y to transfer the rotational energy to the electrical generator of the nacelle 3. The generation of electrical power through the present invention is not a specific object of the present invention and therefore not described in further detail. In general, when not differently specified, the terms axial, radial and circumferential in the following are made with reference to the rotational axis Y. The blades 4 extend radially with respect to the rotational axis Y.

The communication system 10 comprises a leaky feeder 20, and, a first communication device 30, a second communication device 40. Along the leaky feeder 20 an electromagnetic signal 100 is exchanged between the first communication device 30 and the second communication device 40.

The first communication device 30 may be an antenna. In the embodiment of figure 1, two antennas 30 are mounted in the nacelle 30, one installed inside the nacelle 3 and the other installed on an external surface of the nacelle. The electromagnetic signal 100 may be a radio frequency signal transmitted or received by the antennas. In particular, the electromagnetic signal 100 may be an emergency signal. The second communication device 40 may be a radio frequency communication device or other wireless communication device. In particular, the electromagnetic signal 100 may be an emergency communication device. Through the leaky feeder 20, the second communication device 40 may transmit an electromagnetic signal 100 to the two antennas 30. The electromagnetic signal 100 may an emergency signal to be transmitted outside the wind turbine 1 through the antennas 30. Alternatively, through the leaky feeder 20, the second communication device 40 may receive an electromagnetic signal 100 from the two antennas 30, which is transmitted by a transmitter (not shown in figure 1) external to the wind turbine 1. The leaky feeder 20 works as an antenna array and extend along the tower 2 up to the nacelle for allowing communication coverage for the second communication device 40 over the whole length of the tower 2. The second communication device 40 may be positioned inside the wind turbine 1, e.g. inside the tower 2, or outside the wind turbine 1. The second communication device 40 may be a portable device and may be for example used by service technicians.

According to other embodiments of the present invention, the wind turbine 1 comprises a plurality of leaky feeders distributed along the tower 2 and eventually also in the nacelle 3, for optimizing the communication coverage in the wind turbine 1. According to further embodiments of the present invention, a plurality of second communication devices 40 may be used.

The wind turbine 1 comprises a bandpass filter 60 connected to one end of the leaky feeder 20 in the nacelle 3 or in the upper part of the tower 2, close to the nacelle 3. The bandpass filter 60 is interposed between the leaky feeder 20 and to antennas 30, for suppressing undesired radiating electromagnetic emissions from the inside of the wind turbine 1.

According to another embodiment (not shown) the communication system 10 of figure 1 may be applied to an onshore wind turbine.

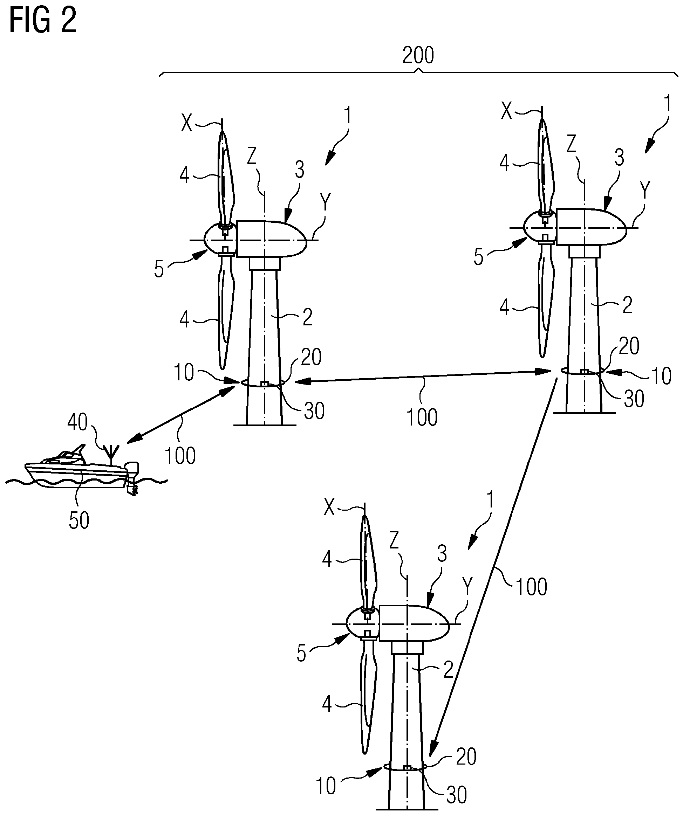

**Figure 2** shows an offshore wind plant 200 including a plurality of floating, monopiles or platform based wind turbines 1.

Analogously to the embodiment of figure 1, each wind turbine 1 of the power plant 200 includes a floating tower 2, a nacelle 3 and a wind rotor 5 with wind blades 4. Differently from the embodiment of figure 1, each wind turbine 1 of the offshore wind plant 200 includes a communication system 10 having a leaky feeder 20 geometrically configured as an arc around an internal or external surface of the tower 2. For example, the leaky feeder 20 may be geometrically configured as a loop. The first communication device 30 is connected to the leaky feeder 20. For example, the first communication device 30 may be an antenna. Alternatively, the first communication device 30 may be a radio frequency or other wireless communication device distanced from the leaky feeder 20. The first communication device 30 may be positioned inside the wind turbine 1, outside the wind turbine 1, or in the surroundings of the wind turbine 1. In particular, the first communication device 30 may be installed on an internal or an external surface of the tower 2. If the first communication device 30 is mounted inside the tower 2 and the leaky feeder 20 is configured as an arc around an external surface of the tower 2, a hole (not shown in the attached figures) is provided through which a coaxial cable (also not shown in the attached figures) extends for connecting the first communication device 30 and the leaky feeder 20. The second communication device 40 is an antenna positioned on a ship 50. According to other embodiments of the present invention, the second communication device 40 may be an antenna positioned on an airplane.

Through the leaky feeder 20, the first communication device 30 communicates with the second communication device 40 through the leaky feeder 20, by transmitting or receiving the electromagnetic signal 100. The leaky feeder 20 works as an antenna array and extends around the tower 2 for allowing communication coverage around the wind turbine 1.

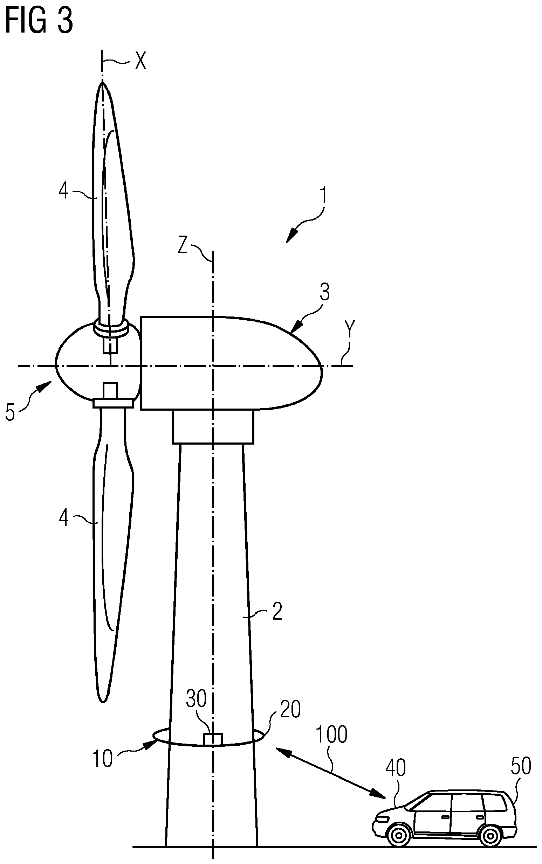

**Figure 3** shows an inshore wind turbine 1 for generating electricity. Analogously to the wind turbines of the embodiment of figure 2, the wind turbine 1 of the power plant 200 includes a floating tower 2, a nacelle 3, a wind rotor 5 with wind blades 4 and a leaky feeder 20 geometrically configured as an arc around an internal or external surface of the tower 2. For example, the leaky feeder 20 may be geometrically configured as a loop. Differently from the wind turbines of the embodiment of figure 2, the tower 2 of the wind turbine 1 in figure 3 is mounted on a terrestrial fundament. The second communication device 40 is an antenna positioned on a terrestrial vehicle 50.

According to the embodiments of the figures 2 and 3, a leaky feeder 20 is used to transmit an electromagnetic signal 100 between a first communication device 30 at the wind turbine 1 and a second communication device 40 remote from the wind turbine 1.

## Claims

1. Wind turbine (1) including a tower (2), a nacelle (3), at least one rotatable blade (4) and a communication system (10) comprising:
at least one leaky feeder (20), and
at least a first communication device (30) connected to the least one leaky feeder (20) for respectively transmitting or receiving an electromagnetic signal (100) through the at least one leaky feeder (20).

2. Wind turbine (1) according to claim 1, wherein the communication system (10) further comprises at least a second communication device (40) for respectively receiving or transmitting the electromagnetic signal (100) respectively from or to the first communication device (30).

3. Wind turbine (1) according to claim 2, wherein the first communication device (30) is an antenna and the second communication device (40) is an emergency communication device.

4. Wind turbine (1) according to claim 3, wherein the antenna (30, 40) is installed inside the nacelle (3) or on an external surface of the nacelle (3).

5. Wind turbine (1) according to claim 3 or 4, wherein the communication system (10) includes a bandpass filter (60).

6. Wind turbine (1) according to claim 5, wherein the bandpass filter (60) is connected to one end of the leaky feeder (20) and to the first communication device (30).

7. Wind turbine (1) according to claim 1 or 2, wherein the at least one leaky feeder (20) is geometrically configured as an arc around the tower (2).

8. Wind turbine (1) according to claim 7, wherein the at least one leaky feeder (20) is geometrically configured as a loop surrounding the tower (2).

9. Wind turbine (1) according to any of the previous claims, wherein at least one of the first communication device (30) and the second communication device (40) is positioned inside the wind turbine (1) or in the surroundings of the wind turbine (1).

10. Wind turbine (1) according to any of the previous claims, wherein at least one of the first communication device (30) and the second communication device (40) is distanced from the wind turbine (1).

11. Wind turbine (1) according to any of the previous claims, wherein at least one of the first communication device (30) and the second communication device (40) is positioned on a vehicle (50).

12. Wind turbine (1) according to any of the previous claims, wherein at least one of the first communication device (30) and the second communication device (40) is a radio frequency communication device.

13. Wind plant (200) including a plurality of wind turbines (1) according to any of the previous claims.
